# EUROPÄISCHE PATENTSCHRIFT

(11) **EP 2 682 834 B1**
(45) Veröffentlichungstag und Bekanntmachung des Hinweises auf die Patenterteilung: **29.05.2019**
(21) Anmeldenummer: 12174772.9
(22) Anmeldetag: 03.07.2012
(51) Int. Cl.: G05B 23/02, G05B 9/02, G06F 11/30

(54) **Verfahren und Vorrichtung zur Überwachung eines Sicherheitsschaltgeräts**
Method and device for monitoring a safety switching device
Procédé et dispositif de surveillance d'un appareil de commutation de sécurité

(43) Veröffentlichungstag der Anmeldung: 08.01.2014
(73) Patentinhaber: KEBA AG, 4041 Linz (AT)
(72) Erfinder: Lenger, Wolfgang, 4040 Linz (AT); Möschl, Manfred, 4209 Engerwitzdorf (AT)
(74) Vertreter: Horn Kleimann Waitzhofer Patentanwälte PartG mbB

(56) Entgegenhaltungen:
- EP-A1- 2 434 358
- EP-A2- 1 037 234
- WO-A2-2010/009488
- DE-A1- 19 734 589
- US-A1- 2012 091 947

## Beschreibung

### TECHNISCHES GEBIET

Die Erfindung betrifft ein Verfahren und eine Vorrichtung zum Freischalten potenziell gefahrbringender Maschinenoperationen einer elektrisch gesteuerten Maschine oder einer Anlage. Das Sicherheitsschaltgerät ist zur Abgabe eines Freigabesignals an einen Sicherheitskreis der elektrisch gesteuerten Maschine eingerichtet und weist sichere elektronische Ausgangsschaltstufen auf.

### STAND DER TECHNIK

Steuerbare technische Maschinen, bei welchen es bei der Ausführung von insbesondere halbautomatisch ausgeführten Maschinenfunktionen zu potenziellen Gefahrensituationen für das Bedienpersonal und/oder für Sachwerte kommen kann, sind beispielsweise Roboter. Insbesondere beim manuellen Programmieren von neuen Bewegungsabläufen, dem so genannten Teaching, bei dem Maschinenoperationen im unmittelbaren Nahbereich zu Bedienpersonen und/oder durch Bedienhandlungen von Bedienpersonen ausgeführt werden, kann es zu den besagten Gefahrensituationen kommen. Gleiches gilt auch beim Einrichten von Pressen oder anderen derartigen Bearbeitungsmaschinen.

Diese steuerbaren technischen Maschinen oder Einrichtungen weisen neben einer normalen Betriebssteuerung noch zusätzliche, in besonders sicherer Technologie aufgebaute Überwachungsgeräte oder Sicherheitssteuerungen auf, die das Vorliegen sicherer Bedingungen oder das Vorliegen sicherer Voraussetzungen für eine gefahrlose Maschinen- und Anlageoperation überprüfen. Wenn die Voraussetzungen für einen sicheren Betrieb nicht gegeben sind, können diese Überwachungsgeräte und/oder Sicherheitssteuerungen die Maschine oder Anlage selbständig, das heißt, unabhängig von der eigentlichen Betriebssteuerung, stillsetzen oder eine Inbetriebnahme der Maschine oder die Durchführung von potenziell gefahrbringenden Maschinenaktionen unterbinden beziehungsweise abbrechen.

Sicherheitsrelevante Voraussetzungen, die vor Inbetriebnahme und während der Ausführung überprüft werden, sind beispielsweise, dass sämtliche Schutztüren oder Abdeckungen geschlossen sind, bestimmte Betriebskenngrößen, wie Geschwindigkeiten, die nicht überschritten werden dürfen, oder Positionen oder Arbeitsräume, die nicht angefahren werden dürfen.

Die aktive und bewusste Zustimmung des Bedienpersonals für eine Maschinen- oder Anlagenoperation kann zusätzlich durch die Betätigung eines Zustimmschalters an einem Handbediengerät oder die gleichzeitige Betätigung zweier Bedienelemente zum Beispiel in Form einer Zweihandschaltung gegeben und damit überprüft werden. Zu diesem Zweck werden die Positionen der Schutztüren oder die Betätigungszustände der Sicherheitsschaltgeräte sowie gegebenenfalls weiterer Informationen von der Sicherheit der Maschine oder Anlage dienenden Sensoren elektrisch signalisiert und an das Überwachungsgerät oder an die Sicherheitssteuerung übermittelt.

Im Regelfall überprüft das Überwachungsgerät dazu den Schaltzustand eines oder mehrerer zweikreisig ausgebildeter Überwachungsstromkreise oder Sicherheitskreise, das heißt, es überprüft, ob beide Kreise des jeweiligen Sicherheitskreises geschlossen sind oder nicht. Nur wenn beide Kreise des Sicherheitskreises geschlossen sind, gibt das Überwachungsgerät die Ausführung der potenziell gefahrbringenden Maschinenoperationen frei. Die Freischaltung bedeutet zum Beispiel, dass die Hauptenergie zu bestimmten Antrieben freigeschaltet werden kann oder mechanische Bremssysteme gelöst werden können.

Die Freischaltung kann für eine ganze Klasse von potenziell gefahrbringenden Maschinenfunktionen gelten und nicht nur für eine spezifische vorbestimmte Funktion. Welche Maschinenfunktion tatsächlich ausgeführt wird, hängt dann beispielsweise davon ab, welche weiteren, technisch nicht speziell sicher ausgestalteten Bedienelemente, zum Beispiel mehrere Verfahrtasten oder ein Joystick, gleichzeitig mit einem Zustimmtaster betätigt werden. Der Zweck des Sicherheitsschaltelementes und des gesamten Sicherheitskreises ist die Sicherstellung, dass jede potenziell gefahrbringende Maschinenfunktion zuverlässig unterbunden oder abgebrochen werden kann, sobald eine der Voraussetzungen für deren sichere Ausführung nicht oder nicht mehr gegeben ist.

Dazu weisen die Sicherheitsschaltgeräte und Sensoren entsprechende potenzialfreie, zweikreisige Ausgangskontakte auf, die in den Sicherheitskreis der steuerbaren technischen Maschine eingebunden sind. Geschlossene Kontakte für beide Kreise signalisieren das Vorliegen eines sicheren Maschinen- oder Anlagenzustands, insbesondere bezogen auf den vom jeweiligen Sicherheitsschaltgerät überwachten Sicherheitsaspekt. Sind mehrere solcher Sicherheitsschaltgeräte vorgesehen, sind diese seriell im Sicherheitskreis eingebunden, so dass die beiden Kreise des Sicherheitskreises nur dann geschlossen sind, wenn alle eingebundenen Sicherheitsschaltgeräte einen sicheren Zustand signalisieren.

Für Sicherheitseinrichtungen der beschrieben Art gilt das Prinzip der Einfehlersicherheit. Das heißt, dass ein einzelner technischer Fehler alleine nicht zum Verlust der Sicherheit der Maschine oder der Anlage führen darf. Eine durch den Fehler erzeugte Betriebsstörung dagegen ist hinnehmbar.

Trotz der Einfehlersicherheit kann es jedoch beim unentdeckten Vorliegen eines Fehlers im Laufe der Zeit zu einem oder mehreren weiteren Fehlern kommen, die sich akkumulieren und dadurch schließlich zu einem Verlust der Sicherheit führen können, so dass die Maschine oder Anlage in einem Gefahrenfall nicht mehr zuverlässig gestoppt oder deren ungewolltes oder unzulässiges Anlaufen nicht mehr sicher unterbunden wird.

Als Folge davon führen Überwachungsgeräte neuerer Bauart, insbesondere komplexe Sicherheitssteuerungen, ständig zusätzliche Überprüfungen durch, um technische Fehler in den Überwachungsstromkreisen zu detektieren. Dabei werden beispielsweise Kurz- oder Querschlüsse in bzw. zwischen den einzelnen Kreisen eines Überwachungsstromkreises aufgedeckt.

Ebenso kann von einigen Sicherheitsschaltgeräten und Überwachungsgeräten neuerer Bauart zusätzlich das Vorliegen inkonsistenter Schaltzustände im Überwachungsstromkreis überprüft werden, so dass beispielsweise ein technischer Defekt signalisiert und die Maschine oder Anlage in einen Not-Aus-Zustand versetzt wird, wenn die beiden Kanäle eines Sicherheitskreises über eine bestimmte festgelegte Zeitspanne hinaus unterschiedliche Schaltzustände aufweisen, zum Beispiel ein Kreis geschlossen und der zweite Kreis geöffnet ist. Eine große Anzahl von Anlagen, die noch länger in Betrieb bleiben und im Laufe der Zeit Umbauten, Erweiterungen und teilweise Erneuerungen erfahren, weisen aber keine solche Zeit- oder Synchronitätsüberwachung der Kreise auf, so dass einzelne Fehler nicht zuverlässig entdeckt werden. Bei Sensoren oder Schaltern, die ihren Schaltzustand nur selten ändern oder die in Serie mit weiteren Sicherheitsschaltelementen in den Sicherheitskreis eingebunden sind, kann aber sogar mit einer Synchronitätsüberwachung eine zuverlässige Fehleraufdeckung nicht sichergestellt werden beziehungsweise eine unentdeckte Fehleranhäufung nicht ausgeschlossen werden.

Mechanische Sicherheitsschaltgeräte, wie Not-Aus Schalter, Endlagenschalter oder Schutztürkontakte, sind normalerweise mit so genannten zwangsöffnenden mechanischen Kontakten ausgestattet, bei denen eine zuverlässige Öffnung der Kontakte durch eine trennende Bewegung eines Betätigungselementes erzwungen und daher mit hinreichender Zuverlässigkeit erfolgt. Das heißt, bei einer ausschließlichen Verwendung solcher mechanischer Sicherheitsschaltgeräte mit zwangsöffnenden Kontakten ist eine unentdeckte Fehleranhäufung auch ohne Zeitüberwachung beziehungsweise Synchronitätsüberwachung der Kanäle ausreichend unwahrscheinlich und die Sicherheit der Maschine oder Anlage somit gewährleistet.

Bei elektronischen Sicherheitsschaltgeräten oder Sensoren steht die Freigabeinformation jedoch nicht als mechanischer Betätigungsweg für eine zwingende Kontaktöffnung, sondern zunächst nur als Ausgangssignal, beispielsweise eines Microcontrollers oder einer sonstigen elektronischen Schaltung zur Verfügung. Das jeweilige Ausgangssignal wird deshalb durch Ansteuerung einer elektronischen Ausgangsschaltstufe in eine potenzialfreie Schaltinformation, d.h. einen leitenden oder nicht leitenden Zustand zwischen einem Anschlusskontaktpaar umgesetzt und in den Sicherheitskreis eingebunden.

Eine mechanische Zwangsöffnung von Kontakten ist bei Sicherheitsschaltgeräten mit elektronischen Ausgangsschaltstufen prinzipiell nicht realisierbar. Bei einem Defekt der elektronischen Ausgangsschaltstufe kann es grundsätzlich auch zu einem permanenten vollständigen oder teilweisen Leitungszustand kommen, der nicht mehr durch das Ansteuersignal beeinflussbar ist, das heißt, dass der Schaltkontakt nicht mehr geöffnet werden kann. Bei einer Verwendung in Kombination mit Überwachungsgeräten oder Sicherheitssteuerungen ohne Synchronitätsüberwachung führt ein einzelner solcher Defekt zu keiner unmittelbar erkennbaren Fehlfunktion, jedoch bereits zu einem Verlust der Einfehlersicherheit, so dass bei einem späteren zweiten Defekt bereits ein Verlust der Sicherheit eintreten und die Anlage in einem eintretenden Gefahrenfall unter Umständen nicht mehr zuverlässig stillgesetzt werden kann.

DE 197 34 589 A1 offenbart einen elektronischen Sicherheitsbaustein, umfassend eine Leistungsstufe mit zumindest einem Freigabepfad, der zumindest zwei in Reihe geschaltete erste und zweite Schaltelemente zum Schalten eines Laststromes aufweist, die über ein erstes Befehlsgerät wie EIN-Taster in den leitenden und über ein zweites Befehlsgerät wie NOT-AUS-Schalter in einen nicht leitenden Zustand steuerbar sind. Es ist vorgesehen, dass das erste Schaltelement ein leitend und nicht leitend steuerbarer mechanischer Schaltkontakt und das zweite Schaltelement ein leitend und nicht leitend steuerbares kontaktloses Schaltelement ist.

EP 2 434 358 A1 offenbart, in einem System mit redundant verschalteten Ausgabebaugruppen während eines Abschalttestes einer ersten Baugruppe in der jeweils anderen Baugruppe eine Stromprüfung durchzuführen und in der abgeschalteten Baugruppe einen Binärtest durchzuführen. Der Binärtest dient dazu, zu sehen, ob die durch die jeweils andere Baugruppe angeschaltete Spannung auch über die entsprechenden Verbindungswege an die Baugruppe mit den Binärtests gelangt.

### OFFENBARUNG DER ERFINDUNG

Es ist eine Aufgabe der vorliegenden Erfindung, die Sicherheit eines mehrkanaligen Sicherheitsschaltgeräts mit elektronischen Ausgangsschaltstufen zu verbessern und insbesondere die Gefahr der unentdeckten Anhäufung von Fehlern zu verringern.

Die gestellten Aufgaben werden durch ein Verfahren zur Überwachung eines Sicherheitsschaltgeräts mit den Merkmalen des Anspruchs 1, durch eine Vorrichtung zur Überwachung eines Sicherheitsschaltgeräts mit den Merkmalen des Anspruchs 14 und durch ein Sicherheitsschaltgerät mit den Merkmalen des Anspruchs 15 gelöst.

Demgemäß wird ein Verfahren zur Überwachung eines Sicherheitsschaltgeräts zum Freischalten einer gefahrbringenden Maschinenoperation einer elektrisch gesteuerten Maschine oder Anlage mit mehreren elektrisch gesteuerten Maschinen vorgeschlagen. Dabei weist das Sicherheitsschaltgerät eine Mehrzahl von elektronischen Ausgangsschaltstufen zur Einkopplung einer Freigabeinformation in einen mehrkreisigen, redundanten Sicherheitskreis und eine Steuer- und Überwachungseinheit zum Bestimmen der Freigabeinformation aus einem oder mehreren sensorischen Eingangssignalen auf. Für das Signalisieren einer Freigabe müssen sämtliche Ausgangsschaltstufen aktiviert, das heißt leitend oder eingeschaltet sein. Sobald eine der Ausgangsschaltstufen deaktiviert, das heißt hochohmig oder ausgeschaltet ist, wird dies von der Anlage als fehlende beziehungsweise entzogene Freigabe gewertet. In einem ersten Schritt wird ein Leitungszustand einer elektronischen Ausgangsschaltstufe der Mehrzahl der Ausgangsschaltstufen durch die Steuer- und Überwachungseinheit überwacht. In einem zweiten Schritt wird wenigstens eine weitere Ausgangsschaltstufe der Mehrzahl der Ausgangsschaltstufen durch die Steuer- und Überwachungseinheit deaktiviert, insbesondere geöffnet, falls der überwachte Leitungszustand einen fehlerhaften Zustand indiziert.

Dabei inkludiert das Überwachen der jeweiligen Ausgangsschaltstufe ein Rücklesen des tatsächlichen Leitungszustands des Ausgangskontaktes der Ausgangsschaltstufe.

Entsprechend wird jede Ausgangsschaltstufe überwacht, wobei bei einer Detektion eines fehlerhaften Zustands der überwachten Ausgangsschaltstufe zumindest eine weitere Ausgangsschaltstufe, insbesondere alle weiteren Ausgangsschaltstufen, deaktiviert wird bzw. werden. Dies gilt entsprechend bei einem Sicherheitsschaltgerät mit einer Mehrzahl N von Ausgangsschaltstufen (N > 2). Wenn hierbei eine der N Ausgangsschaltstufen einen fehlerhaften Zustand hat, werden zumindest eine, vorzugsweise jedoch alle der weiteren N-1 Ausgangsschaltstufen deaktiviert. Durch das erfindungsgemäße Rücklesen und Überwachen der Ausgangsschaltstufen bzw. deren Ausgangskontakte und die Deaktivierung zumindest einer weiteren Ausgangsschaltstufe in einem festgestellten Fehlerfall ist die Sicherheit des Sicherheitsschaltgerätes erhöht.

Erfindungsgemäß wird der tatsächlich vorliegende Leitungszustand (das Leitungsvermögen) einer jeden Ausgangsschaltstufe eines Sicherheitsschaltgerätes durch eine Steuer- und Überwachungseinheit im Sicherheitsschaltgerät selbst überwacht. Falls für eine der Ausgangsschaltstufen ein Defekt, insbesondere ein permanenter Leitungszustand festgestellt wird, wird das Öffnen der jeweils anderen Ausgangsschaltstufe veranlasst bzw. ein Schließen dieser jeweils anderen Ausgangsschaltstufe unterbunden und damit die Signalisierung einer Freigabe für den Sicherheitskreis und die Ausführung potenziell gefahrbringender Maschinenoperationen zuverlässig verhindert.

Damit wird der tatsächliche Schaltzustand der Ausgangsschaltstufe zuverlässig überwacht, und im Falle eines Defektes, der ansonsten unentdeckt bliebe, jedoch die Sicherheit einschränken würde, das weitere Freischalten einer potenziell gefahrbringenden Maschinenoperation unterbunden und damit eine erhöhte Gefährdung von Gesundheit und Sachwerten verhindert.

Bei dem fehlerhaften Zustand oder Defekt kann es sich beispielsweise um einen permanenten Leitungszustand an einer der Ausgangsschaltstufen handeln. Bei den elektronischen Schaltelementen handelt es sich bevorzugt um elektronische Schalter. Grundsätzlich ist das Verfahren aber auch mit anderen, insbesondere mit nicht zwangsöffnenden mechanischen oder elektromechanischen Schaltern (z.B. Relais) zweckmäßig verwendbar.

Durch die überwachten Ausgangsschaltstufen und der Überprüfung ihrer aktuellen Leitungszustände wird bei einem Fehler in einem der Kreise die Freigabe einer potenziell gefahrbringenden Maschinenfunktion durch Deaktivierung des anderen Kreises beziehungsweise der anderen Kreise umgehend unterbunden. Stattdessen wird durch die nicht mehr ermöglichte Freigabe eine Betriebsstörung wahrgenommen, die in der Folge zu einer Aufdeckung und schließlich Beseitigung des Fehlers führt beziehungsweise führen muss, bevor der Betrieb wieder aufgenommen werden kann.

Dadurch wird der Fehlerdiagnosegrad erhöht und eine unentdeckte Fehleranhäufung samt Sicherheitsverlust zuverlässig verhindert.

Insbesondere sind die wenigstens zwei Kreise (Ausgangsschaltstufen) voneinander galvanisch getrennt.

Dabei wird das Deaktivieren oder Sperren der wenigstens einen weiteren Ausgangsschaltstufe durch ein Öffnen eines elektronischen Schaltelements der wenigstens einen weiteren Ausgangsschaltstufe gebildet, falls das elektronische Schaltelement geschlossen ist.

Ferner wird das Deaktivieren oder Sperren der wenigstens einen weiteren Schaltstufe durch ein Unterdrücken eines Schließens des elektronischen Schaltelements der wenigstens einen weiteren Schaltstufe gebildet, falls das elektronische Schaltelement geöffnet ist.

Eine weitere Verbesserung der Sicherheit kann dadurch erreicht werden, dass bei zwei oder mehr Ausgangsschaltstufen mit jeweils einem einzigen elektronischen Schaltelement oder elektronischen Schaltern in wenigstens zwei Ausgangsschaltstufen elektronische Schalter unterschiedlicher Typen und/oder unterschiedlicher Technologie verwendet werden. So kann beispielsweise verhindert werden, dass in einem Sicherheitsschaltgerät nur baugleiche, produktionsseitig mit gleichen Fehlern behaftete elektronische Schaltelemente eingebaut werden.

Zur Überprüfung und/oder Überwachung des tatsächlichen Leitungszustands der Ausgangsschaltstufen ist in dem Sicherheitsschaltgerät für jede der Ausgangsschaltstufen eine Strom- oder Spannungsquelle für einen Prüfstrom implementiert.

Dabei wird das Sicherheitsschaltgerät zur Überwachung des Leitungszustands der wenigstens einen Ausgangsschaltstufe mittels eines über das elektronische Schaltelement geführten Prüfstroms einer Spannungs- oder Stromquelle des Sicherheitsschaltgeräts überwacht. Vorzugsweise ist dazu für jede Ausgangsschaltstufe jeweils eine Strom- oder Spannungsquelle implementiert.

Dabei wird der Prüfstrom von der in dem Sicherheitsschaltgerät integrierten Spannungs- oder Stromquelle bereitgestellt und nicht etwa über den Stromfluss im Sicherheitskreis selbst bestimmt. Damit kann der Leitungszustand auch dann zuverlässig überprüft werden, wenn im Sicherheitskreis weitere Sicherheitsschaltelemente in Serie geschaltet sind und deren Kontakte geöffnet sind. Andernfalls würde völlig unabhängig vom tatsächlichen Leitungszustand der geprüften Ausgangsschaltstufe kein überprüfbarer Stromfluss auftreten, so dass in diesem Fall kein Rückschluss auf den tatsächlichen Leitungszustand gezogen werden könnte.

Es werden der Strom des Sicherheitskreises und der Prüfstrom mittels zweier entgegengeschalteter Dioden entkoppelt. Die beiden Dioden stellen sicher, dass die Stromrichtung sowohl im Prüfstromkreis als auch im Sicherheitskreis nur in einer Richtung möglich ist und der Strom über das elektronische Schaltelement dem Betrag nach immer der Summe der Beträge der Ströme im Prüfstromkreis und im Sicherheitskreis entspricht. Bei geöffnetem Schalter kann sich aufgrund der entgegengeschalteten Dioden kein Stromfluss über die Prüfstromquelle und den Sicherheitskreis ausbilden. Die Unterbindung der ungewollten gegenseitigen Beeinflussung von Prüfstromkreis und Sicherheitskreis durch die beiden Dioden erlaubt die zuverlässige Prüfung des Leitungszustands des elektronischen Schaltelements selbst dann, wenn im Sicherheitskreis weitere Kontakte parallel geschaltet und geschlossen sind, die Ausgangskontakte der elektronischen Ausgangsschaltstufe also betriebsbedingt extern kurzgeschlossen beziehungsweise überbrückt sind.

Somit wird der Prüfstromfluss zufolge der Spannungs- oder Stromquelle vom Stromfluss im Sicherheitskreis durch je eine Diode entkoppelt, so dass damit in beiden entkoppelten Stromkreisen nur dann tatsächlich ein Stromfluss zustande kommt, wenn der elektronische Schalter geschlossen ist.

Dabei wird der Prüfstrom über dasselbe elektronische Schaltelement, das in den Sicherheitskreis eingebunden ist und das den Stromfluss im Sicherheitskreis trägt, geführt. Bei der Stromquelle kann es sich um eine spannungsbegrenzte Stromquelle handeln.

Dabei wird zur Überwachung des Leitungszustands die entsprechende Ausgangsschaltstufe mit dem Prüfstrom beaufschlagt, wobei der Leitungszustand der Ausgangsschaltstufe in Abhängigkeit des resultierenden Prüfstroms bestimmt wird.

Bei einer Ausführungsform wird der Prüfstrom über eine primärseitige Stromaufnahme des potenzialgetrennten Energiewandlers bestimmt, welcher Energiewandler mit dem Strom der Prüfstromquelle belastet wird beziehungsweise die Prüfstromquelle speist.

Bei einer weiteren Ausführungsform wird eine Sendediode eines galvanisch getrennten Optokopplers zur Übertragung des resultierenden Prüfstroms an die Steuer- und Überwachungseinheit in Serie in den Prüfstromkreis geschaltet.

Durch den separaten Prüfstrom kann das Sicherheitsschaltgerät in Serie mit anderen Schaltelementen im Sicherheitskreis eingebunden und betrieben werden und den eigenen Schaltzustand auch dann zuverlässig feststellen, wenn die Kontakte der weiteren in Serie geschalteten Sicherheitsschaltgeräte geöffnet sind und an den Anschlussklemmen des Sicherheitsschaltgeräts zufolge dem Sicherheitskreis weder ein Strom fließt noch eine Spannung anliegt.

Bei einer weiteren Ausführungsform wird zur Überwachung des Leitungszustands der überwachten Ausgangsschaltstufe eine an dem elektronischen Schaltelement der überwachten Ausgangsschaltstufe gemessene Spannung mit einer vorgegebenen Grenzspannung, die kleiner als eine Spannung an der unbelasteten Spannungs- oder Stromquelle für den Prüfstrom und größer als eine Spannung des geöffneten überwachten Sicherheitskreises ist, verglichen, wobei ein fehlerhafter Zustand bestimmt wird, wenn bei deaktiviertem Schaltelement die gemessene Spannung kleiner als die vorgegebene Grenzspannung ist, und ein fehlerfreier Zustand bestimmt wird, wenn die gemessene Spannung größer gleich als die vorgegebene Grenzspannung ist. Dabei wird der Umstand ausgenutzt und geprüft, dass bei vollständig geöffnetem Schalter zwischen dessen Zuleitungen die größere der beiden Spannungen aus der maximal verfügbaren Spannung der leerlaufenden und spannungsbegrenzten Stromquelle und der Spannung des Sicherheitskreises anliegen muss. Wird am Schaltelement eine Spannung festgestellt, die größer ist als die Spannung des Sicherheitskreises und somit von der Prüfstomquelle herrührt, so wird gleichzeitig die Diode im Sicherheitskreis in Sperrrichtung betrieben, so dass daraus weiter zuverlässig geschlossen werden kann, dass kein Stromfluss im Sicherheitskreis auftritt.

Somit kann zur Überwachung des Leitungszustands der Ausgangschaltstufe eine Spannung am Schaltelement bestimmt und mit einer vorgegebenen Grenzspannung verglichen werden. Die vorgegebene Grenzspannung ist kleiner als eine Spannung der unbelasteten Prüfstromquelle und größer als eine Spannung des geöffneten Sicherheitskreises, wobei die Leerlaufspannung der Prüfstromquelle höher dimensioniert ist, als die Betriebsspannung des Sicherheitskreises. Liegt der bestimmte Spannungswert am Schaltelement über dem Grenzwert, so ist das Schaltelement in einem Sperrzustand. Liegt der bestimmte Spannungswert dagegen unter dem Grenzwert, obwohl das elektronische Schaltelement gesperrt sein sollte, so ist das Schaltelement zumindest teilweise leitend, das heißt fehlerhaft.

Vorteilhafterweise kann jede Ausgangsschaltstufe samt der zugeordneten Strom- oder Spannungsquelle für den Prüfstrom gegenüber der Steuer- und Überwachungseinheit potenzialgetrennt sein. Die Steuer- und Überwachungseinheit kann dabei ein festgelegtes Bezugspotenzial gegenüber Masse aufweisen oder ebenfalls potenzialfrei sein.

Durch diese Maßnahme werden die Ausgangsschaltstufen potenzialfrei und können wie die mechanischen Schaltkontakte herkömmlicher Sicherheitsschaltgeräte in beliebiger Reihen- und Parallelschaltung mit anderen potenzialfreien Kontakten betrieben werden. Dies ist erforderlich für die Einbindung in einen Sicherheitskreis und unterbindet zudem die Gefahr von Störungen oder Fehlfunktionen mit dem daraus resultierenden Sicherheits- oder Funktionsverlust durch Potenzialverschleppung.

Bei einer weiteren Ausführungsform werden die Energie für den Prüfstrom und die Energie für eine Ansteuerung des elektronischen Schaltelements für jeweils eine Ausgangsschaltstufe gemeinsam über einen potenzialgetrennten Energiewandler übertragen. Der potenzialgetrennte Energiewandler ist zum Beispiel ein potenzialgetrennter DC/DC Spannungswandler. Dieser kann beispielsweise als vorgefertigte integrierte Baugruppe oder aus einer Verschaltung diskreter Bauelemente gebildet sein.

Bei einer weiteren Ausführungsform wird die jeweilige Ausgangsschaltstufe mit einem potenzialfreien Signalübertragungselement ausgestattet, mit welchem eine von dem potenzialgetrennten Energiewandler bereitgestellte Steuerspannung für die Ansteuerung des elektronischen Schaltelementes geschaltet wird. Das Signalübertragungselement ist insbesondere galvanisch getrennt.

Die Belastung des potenzialgetrennten Energiewandlers wird maßgeblich durch die Strom- bzw. Spannungsquelle für den Prüfstrom verursacht. Der Prüfstromfluss wirkt sich direkt auf den eingangsseitigen Stromfluss des potenzialgetrennten Energiewandlers aus und kann eingangsseitig oder primärseitig gemessen und geprüft werden. Dadurch erübrigt sich eine ausgangs- oder sekundärseitige Bestimmung des Prüfstroms und eine Rückermittlung der Information an die Steuer- und Überwachungseinheit über eine weitere potenzialgetrennte Signalverbindung.

Ein Vorteil dieser Ausführungsform ist, dass der primärseitige Stromfluss als Analogwert von der Steuer- und Überwachungsschaltung bestimmt und ausgewertet werden kann. Damit steht eine Analoginformation über den sekundärseitigen Prüfstrom zur Verfügung. Dadurch können nicht nur absolute Grenzwerte geprüft, sondern auch relative Änderungen bei einem Schaltvorgang geprüft und bewertet werden.

Dabei kann der Prüfstrom nur solange bestimmt werden, wie der potenzialgetrennte Energiewandler angesteuert und die Energie für die Strom- und Spannungsquelle des Prüfstroms übertragen wird. Um einen sicheren Aus-Zustand überprüfen zu können, muss der potenzialgetrennte Energiewandler ständig von der Steuer- und Überwachungseinheit angesteuert werden, so dass die Ansteuerung des elektronischen Schaltelements über einen zusätzlichen Optokoppler potenzialfrei geschaltet wird.

Insgesamt resultiert aus dieser Lösung eine genauere und zuverlässige Erfassung des über den Schalter fließenden Prüfstromes bei einer sehr einfachen und kostengünstigen Schaltung.

Ferner kann der Analogwert des primärseitigen Versorgungsstroms zu dem DC/DC Wandler oder den DC/DC Wandlern von jeweils einem Kreis zugeordneten Microcontroller über einen ADC Wandler erfasst und ausgewertet werden.

Um die Sicherheit weiter zu erhöhen, kann wenigstens einer der Kreise bzw. eine der Ausgangsschaltstufen zwei elektronische Schaltelemente, wie elektronische Schalter, aufweisen, die seriell geschaltet sind. Beide elektronischen Schaltelemente müssen leitend sein, um eine Weitergabe des Freigabesignals zuzulassen. Diese Redundanz erhöht weiter die Abschaltsicherheit der Maschine oder Anlage und somit die Sicherheit des Bedienpersonals. Außerdem wird eine höhere Spannungsfestigkeit erzielt.

Wenn ein Kreis bzw. eine Ausgangsschaltstufe zwei in Serie geschaltete elektronische Schaltelemente aufweist, können die beiden elektronischen Schaltelemente zum Beispiel elektronische Schalter unterschiedlicher Typen oder elektronische Schaltelemente unterschiedlicher Technologien sein. Auch dadurch wird die Sicherheit des Sicherheitsschaltgeräts weiter erhöht, da sich ein Fehler, zum Beispiel hervorgerufen durch externe Störungen oder Einflüsse, nicht gleichzeitig auf beide elektronischen Schaltelemente in gleicher Weise auswirken muss. Hierdurch wird eine Gleichfehlerunterdrückung bewirkt.

Die Steuer- und Überwachungseinheit kann unabhängig von der tatsächlich vorliegenden bzw. in den Sicherheitskreis einzukoppelnden Freigabeinformation in periodischen Abständen kurze Deaktivierungen oder Abschaltungen der Schaltelemente durchführen, um ein zuverlässiges Öffnen der elektronischen Schaltelemente zu überprüfen. Dabei liegt die Zeit der erzwungenen Deaktivierung oder Abschaltung insbesondere unterhalb einer vorgegebenen Reaktionszeit der Sicherheitssteuerung bzw. des Überwachungsgeräts für den Sicherheitskreis, um zu vermeiden, dass diese periodischen Abschaltungen zu einer tatsächlichen Betriebsstörung der Maschine oder Anlage führen.

Durch diese Überprüfung wird ein eingetretener Defekt an einer der Ausgangsschaltstufen auch dann frühzeitig entdeckt, wenn die Ausgangsschaltstufen über einen längeren Zeitraum durchgehend angesteuert werden und einen sicheren Zustand signalisieren. Durch die kurzzeitige Wegnahme der Zustimmung wird praktisch der nicht sichere Zustand der Maschine oder Anlage getestet bzw. zwangsdynamisiert und so die unbemerkte Fehleranhäufung zuverlässig verhindert.

Bei einer weiteren Ausführungsform wird die Steuer- und Überwachungseinheit mit einer Aktivitätsüberwachungseinheit ausgestattet, mit welcher das elektronische Schaltelement nur dann angesteuert wird, wenn die Steuer- und Überwachungseinheit den logischen Pegel eines Steuersignals mit zumindest einer vorbestimmten Mindestfrequenz ändert.

Beispielsweise ist in die Leitung für die Versorgungsspannung für die primärseitige Ansteuerung der potenzialgetrennten Energiewandler ein Schaltelement, zum Beispiel ein Transistor eingebunden, welches von der Aktivitätsüberwachungseinheit angesteuert wird. Wie oben ausgeführt, steuert die Aktivitätsüberwachungseinheit das Schaltelement nur dann an, wenn das Steuersignal von dem Microcontroller der Steuer- und Überwachungseinheit seinen logischen Pegel mit einer gewissen Mindestfrequenz ändert. Der Microcontroller ist derart programmiert, dass das generierte Steuersignal im normalen Betrieb in regelmäßigen Abständen, insbesondere bei jedem Durchlauf eines zyklisch abgearbeiteten Programms, seinen logischen Pegel ändert.

Sobald im Microcontroller ein Fehler auftritt, der die zyklische Abarbeitung des Steuerprogramms verhindert, wird die Spannungsversorgung zu den DC/DC Übertragern abgeschaltet. Dadurch fällt unabhängig von dem über den Optokoppler übertragenen Schaltbefehl die Steuerspannung zur Ansteuerung der Ausgangsschalter weg und die Schalter gehen in einen hochohmigen Zustand, d.h. die beiden Kreise beziehungsweise Kanäle des Sicherheitskreises werden geöffnet und die Maschine umgehend in einen sicheren Zustand versetzt.

Bei einer weiteren Ausführungsform wird die Steuer- und Überwachungseinheit mit einer Überspannungsüberwachungseinheit ausgestattet, mit welcher eine Ansteuerung des elektronischen Schaltelements blockiert wird, wenn die Versorgungsspannung der Steuer- und Überwachungseinheit über einen vorbestimmten Grenzwert ansteigt.

Dabei wird das oben erwähnte Schaltelement insbesondere auch von der Überspannungsüberwachungseinheit angesteuert.

Dadurch wird die Versorgungsspannung für den Microcontroller oder für die Microcontroller der Steuer- und Überwachungsschaltung überwacht und bei einem Ansteigen aufgrund eines Schaltungsdefektes, der zu einer Störung oder Beschädigung der Microcontroller führen kann, umgehend die Versorgung zu den DC/DC Übertragern abgeschaltet. Dadurch fällt unabhängig von dem über den Optokoppler übertragenen Schaltbefehl die Steuerspannung zur Ansteuerung der Ausgangsschalterweg und die Schalter gehen in einen hochohmigen Zustand, d.h. die beiden Kreise des Sicherheitskreises werden geöffnet und die Maschine umgehend in einen sicheren Zustand versetzt.

Bei einer weiteren Ausführungsform wird die Steuer- und Überwachungseinheit mit einer Kommunikationsschnittstelle ausgestattet, welche zum Übertragen von Daten, insbesondere von Betätigungszuständen, Statusinformationen und Fehlerinformationen, eingerichtet ist.

Bei einer weiteren Ausführungsform werden die Ausgangsschaltstufen der Mehrzahl der Schaltkreise unterschiedlich, insbesondere diversitär aufgebaut.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Außerdem wird ein Datenträger mit einem gespeicherten Computerprogramm mit Befehlen vorgeschlagen, welche die Durchführung des wie oben erläuterten Verfahrens auf einer programmgesteuerten Einrichtung veranlasst.

Des Weiteren wird eine Vorrichtung zur Überwachung eines Sicherheitsschaltgeräts zum Freischalten einer gefahrbringenden Maschinenoperation einer elektrisch gesteuerten Maschine vorgeschlagen, wobei die Vorrichtung eine Mehrzahl von elektronischen Ausgangsschaltstufen zur redundanten Einkopplung einer Freigabeinformation in einen mehrkreisigen, redundanten Sicherheitskreis und eine Steuer- und Überwachungseinheit aufweist, welche zum Überwachen eines Leitungszustandes wenigstens einer elektronischen Ausgangsschaltstufe der Mehrzahl der Ausgangsschaltstufen und zum Deaktivieren wenigstens einer weiteren Ausgangsschaltstufe der Mehrzahl der Ausgangsschaltstufen eingerichtet ist, falls der überwachte Leitungszustand einen fehlerhaften Zustand indiziert, wobei die Steuer- und Überwachungseinheit dazu eingerichtet ist, die wenigstens eine weitere Ausgangsschaltstufe durch ein Öffnen eines elektronischen Schaltelements der wenigstens einen weiteren Ausgangsschaltstufe zu deaktivieren, falls das elektronische Schaltelement geschlossen ist, wobei die Steuer- und Überwachungseinheit dazu eingerichtet ist, die wenigstens eine weitere Ausgangsschaltstufe durch ein Unterdrücken eines Schließens des elektronischen Schaltelements der wenigstens einen weiteren Ausgangsschaltstufe zu deaktivieren, falls das elektronische Schaltelement geöffnet ist, wobei das Sicherheitsschaltgerät zur Überwachung des Leitungszustands der wenigstens einen Ausgangsschaltstufe mittels eines über das elektronische Schaltelement geführten Prüfstroms einer Spannungs- oder Stromquelle des Sicherheitsschaltgeräts überwacht wird, wobei der Strom des Sicherheitskreises und der Prüfstrom mittels zweier entgegengeschalteter Dioden entkoppelt sind, und wobei die Steuer- und Überwachungseinheit dazu eingerichtet ist, zur Überwachung des Leitungszustands der wenigstens einen Ausgangsschaltstufe das entsprechende elektronische Schaltelement mit dem Prüfstrom zu beaufschlagen, wobei der Leitungszustand der wenigstens einen Ausgangsschaltstufe in Abhängigkeit des Prüfstromflusses über das Schaltelement bestimmt wird.

Die jeweilige Einheit, zum Beispiel Steuer- und Überwachungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Außerdem wird ein Sicherheitsschaltgerät in der Art eines manuell betätigbaren Zustimmtasters zum Freischalten einer potenziell gefahrbringenden Maschinenoperation einer elektrisch gesteuerten Maschine durch eine Bedienperson vorgeschlagen. Das Sicherheitsschaltgerät weist eine Mehrzahl von elektronischen Ausgangsschaltstufen zur Einkopplung einer Freigabeinformation in einen mehrkreisigen, redundanten Sicherheitskreis und eine wie oben beschriebene Vorrichtung zur Überwachung der Mehrzahl der elektronischen Ausgangsschaltstufen auf.

Dabei hat das Sicherheitsschaltgerät insbesondere ein Gehäuse, wenigstens eine in das Gehäuse elastisch bzw. rückfedernd eindrückbare Taste als Betätigungselement, wenigstens zwei sensorische Erfassungskreise, in dem Gehäuse umfassend jeweils eine Ausgangsschaltstufe mit wenigstens einem elektronischen Schalter oder einem elektronischen Schaltelement, eine zugeordnete Steuer- und Überwachungseinheit und jeweils eine Strom- oder Spannungsquelle für einen Prüfstrom. Dabei kann das Sicherheitsschaltgerät nur dann eine gültige Freigabeinformation signalisieren, wenn alle Ausgangsschaltstufen einen leitenden Schaltzustand aufweisen.

Weist das Sicherheitsschaltgerät zwei oder mehr elektronische Schalter auf, so sind vorzugsweise wenigstens zwei der elektronischen Schalter elektronische Schalter unterschiedlichen Typs oder unterschiedlicher Technologien.

Ferner ist das Betätigungselement von einer Bedienperson insbesondere in drei Positionen bringbar.

Aus der ersten Position kann das Betätigungselement von der Bedienperson in eine zweite Position bewegt, zum Beispiel gedrückt oder geschoben werden. Ist das Betätigungselement in der zweiten Position, die nicht identisch mit der ersten Position ist, kann das Sicherheitsschaltgerät bzw. die Bedienperson das Signal für einen sicheren Betrieb gegeben, so dass die Anlage angefahren, Antriebe der Anlage eingekoppelt und/oder Bremsen gelöst werden können. Solange sich das Betätigungselement in der zweiten Position befindet, signalisiert der Bediener sichere Betriebsbedingungen.

Sobald das Betätigungselement aus der zweiten Position in die erste oder Ausgangsposition, auch Ruheposition genannt, zum Beispiel durch Federkraft zurückbewegt wird, wird einer Sicherheitssteuerung der Anlage signalisiert, dass der Betrieb der Anlage nicht länger sicher ist und die Anlage wird unverzüglich gestoppt.

Der Benutzer kann das Betätigungselement aus der zweiten Position durch zum Beispiel eine Erhöhung der auf das Betätigungselement wirkenden Druckkraft in eine dritte Position bewegen, was - wie die Rückkehr - in die erste Position zu einem unverzüglichen Stopp der Anlage führt. Diese dritte Position, die unterschiedlich von der ersten Position und unterschiedlich von der zweiten Position ist, wird auch als Panikposition bezeichnet, da ein plötzliches Erschrecken des Bedieners oft die Ursache für die Bewegung des Betätigungselements aus der zweiten in die dritte Position sein kann. Um nach einer Stillsetzung, ausgelöst durch die Panikposition des Betätigungselements, die Anlage erneut starten zu können, genügt es nicht, das Betätigungselement in die zweite Position zurückzubewegen. Vielmehr ist es erforderlich, dass das Bedienelement zurück in die erste Position oder Ausgangsposition bewegt wird, aus der es durch den Bediener zur Signalisierung eines sicheren Betriebszustands wieder in die zweite Position bewegt werden kann.

Ein Sicherheitsschaltelement in der Art des zuvor beschriebenen mechanisch betätigten Zustimmtasters ist nur eine der möglichen Formen eines erfindungsgemäßen Sicherheitsschaltelementes. Ein solches Sicherheitsschaltelement kann beispielsweise auch durch einen berührungslos wirkenden kapazitiven oder induktiven Näherungssensor mit elektronischer Auswertung und entsprechenden elektronischen Ausgangsschaltstufen gebildet sein, der dann beispielsweise die Funktion eines sicheren berührungslos auslösenden Endlagenschalters oder eines sicheren Füllstandssensors übernimmt. Im Gegensatz zu mechanisch betätigten Schaltern lassen sich solche berührungslosen Sensoren vollständig und dauerhaft hermetisch kapseln und sind somit auch in der Umgebung von aggressiven Medien oder in explosionsgeschützten Bereichen einsetzbar.

Die Erfindung wird nachfolgend anhand der in den schematischen Figuren angegebenen Ausführungsbeispiele näher erläutert. Es zeigen:
- Fig. 1: ein schematisches Ablaufdiagramm eines Ausführungsbeispiels eines Verfahrens zur Überwachung eines Sicherheitsschaltgeräts;
- Fig. 2: einen Schaltkreis einer Ausführungsform des Sicherheitsschaltgeräts;
- Fig. 3: einen Schaltkreis einer Ausführungsform der Ausgangsschaltstufe;
- Fig. 4: ein schematisches Diagramm zur Illustrierung der Anwendung eines Sicherheitsschaltgerätes in Verbindung mit einem gesteuerten Roboter; und
- Fig. 5: ein schematisches Blockdiagramm eines Ausführungsbeispiels einer Vorrichtung zur Überwachung eines Sicherheitsschaltgeräts.

In allen Figuren sind gleiche bzw. funktionsgleiche Mittel und Einrichtungen - sofern nichts anderes angegeben - mit denselben Bezugszeichen versehen.

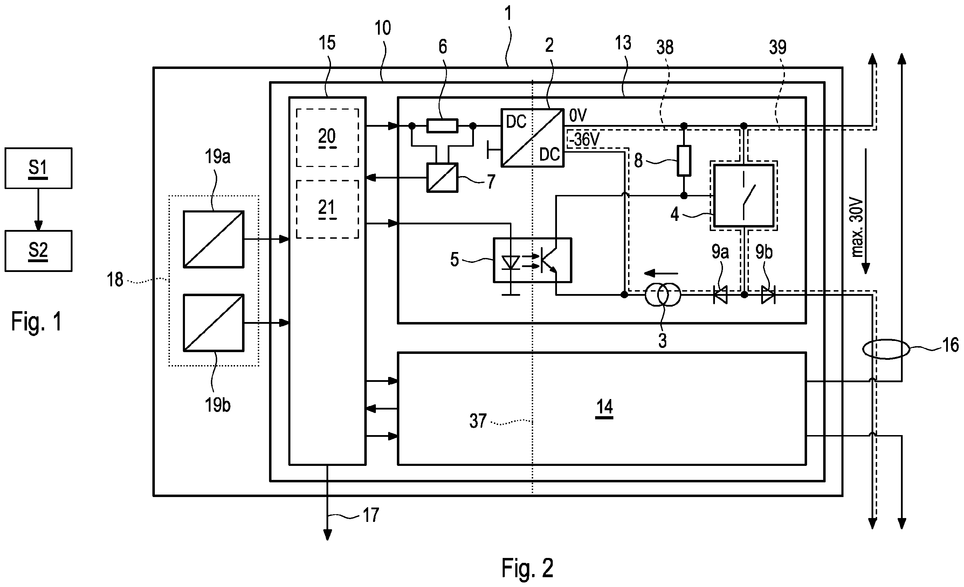

Die Fig. 1 illustriert ein schematisches Ablaufdiagramm eines Ausführungsbeispiels eines Verfahrens zur Überwachung eines Sicherheitsschaltgeräts zum Freischalten einer potenziell gefahrbringenden Maschinenoperation einer elektrisch gesteuerten Maschine.

Das Sicherheitsschaltgerät 1 hat eine Mehrzahl von elektronischen Ausgangsschaltstufen 13, 14 zur Einkopplung einer Freigabeinformation in einen redundant mehrkreisigen bzw. mehrkanaligen Sicherheitskreis 16 und eine Steuer- und Überwachungseinheit 15 (siehe Fig. 2).

In Schritt S1 wird ein Leitungszustand (Leitungsvermögen) einer elektronischen Ausgangsschaltstufe 13, 14 der Mehrzahl der elektronischen Ausgangsschaltstufen 13, 14 durch die Steuer- und Überwachungseinheit 15 überwacht.

In Schritt S2 wird wenigstens eine weitere elektronische Ausgangsschaltstufe 13, 14 der Mehrzahl der Ausgangsschaltstufen 13, 14 durch die Steuer- und Überwachungseinheit 15 deaktiviert, falls der überwachte Leitungszustand einen fehlerhaften Zustand indiziert. Der fehlerhafte Zustand ist beispielsweise dadurch charakterisiert, dass er von einem Ansteuersignal, insbesondere einem der vorliegenden Freigabeinformation zugeordneten Schaltzustand, abweicht. Das Deaktivieren erfolgt insbesondere durch die Steuer- und Überwachungseinheit 15 dadurch, dass ein elektronisches Schaltelement (siehe Bezugszeichen 4 in Fig. 2) geöffnet wird, falls das elektronische Schaltelement 4 geschlossen ist. Ferner wird das Deaktivieren der wenigstens einen weiteren Ausgangsschaltstufe 13, 14 durch ein Unterdrücken eines Schließens des elektronischen Schaltelements 4 gebildet, falls das elektronische Schaltelement 4 geöffnet ist.

Ferner zeigt Fig. 2 einen Schaltkreis eines beispielhaften Sicherheitsschaltgerätes 1.

Das Sicherheitsschaltgerät 1 der Fig. 2 weist eine Vorrichtung 10, insbesondere eine elektronische Auswerteschaltung 10, mit zwei elektronischen Ausgangsschaltstufen 13, 14 zur Einkopplung einer Freigabeinformation in einen zweikreisigen, redundanten Sicherheitskreis 16 und einer Steuer- und Überwachungseinheit 15 auf. Die Steuer- und Überwachungseinheit 15 wertet die Sensorsignale zweier unabhängig redundanter sensorischer Erfassungskreise 19a, 19b eines zweikreisigen Zustimmtasters 18 aus, leitet daraus eine insbesondere ebenfalls zweikanalig redundante Freigabeinformation ab und steuert die beiden Ausgangsschaltstufen 13, 14 entsprechend der Freigabeinformation an, um diese Freigabeinformation in den zweikreisig redundanten Sicherheitskreis 16 einzukoppeln. Die beiden Ausgangsschaltstufen 13 und 14 sind insbesondere identisch oder zumindest weitgehend gleich aufgebaut, so dass in Fig. 2 nur die erste Ausgangsschaltstufe 13 detailliert mit ihren wesentlichen Komponenten gezeichnet ist. Die Ausgangsschaltstufe 13 weist einen DC/DC-Wandler 2, eine Strom- oder Spannungsquelle 3, einen elektronischen Schalter 4, einen Optokoppler 5, einen Strommesswiderstand (Shunt) 6 und eine dazu parallel geschaltete Strommesseinheit 7 auf. Der DC-DC-Wandler 2 ist zur potenzialgetrennten Bereitstellung der Energie sowohl für die Ansteuerung des elektronischen Schalters 4 als auch für die Versorgung der Strom- oder Spannungsquelle 3 eingerichtet. Bei der dargestellten Stromquelle 3 handelt es sich insbesondere um eine Schaltung zur definierten Begrenzung des vom DC-DC-Wandler gespeisten Prüfstromflusses. Der Optokoppler 5 ist zur potenzialgetrennten Übertragung der Ansteuerinformation von der Steuer- und Überwachungseinheit 15 zum elektronischen Schalter 4 eingerichtet.

Die im Wesentlichen gleichen Ausgangsschaltstufen 13, 14 mit nur jeweils einem elektronischen Schalter 4 können sich zum Beispiel dadurch unterscheiden, dass jede der Ausgangsschaltstufen 13, 14 einen elektronischen Schalter 4 unterschiedlichen Typs oder unterschiedlicher Technologie aufweist.

Die gestrichelte Linie 37 deutet an, dass die Ausgangsschaltstufen 13, 14 potenzialgetrennt von der zugeordneten Steuer- und Überwachungseinheit 15 sind. Der elektronische Schalter 4 ist in einem offenen Zustand gezeigt, das heißt, das Sicherheitsschaltgerät sendet im gezeigten Schaltzustand kein Freigabesignal aus, um eine gefahrbehaftete Bewegung oder Funktion einer nicht gezeigten Maschine oder Anlage freizugeben. Um den elektronischen Schalter 4 zu schließen, muss ein Bediener zum Beispiel ein Betätigungselement, im dargestellten Fall den Zustimmtaster 18, betätigen. Durch die Betätigung des Tasters 18 müssen sich die elektronischen Schalter 4 beider Ausgangsschaltstufen 13, 14 zeitgleich oder zumindest nahezu zeitgleich schließen. Nur dann wird das Freigabesignal an zum Beispiel eine Maschinen- oder Anlagensteuerung gesendet, wodurch zum Beispiel Antriebe 29 aktiviert oder Bremsen gelöst werden können. Schließt einer der elektronischen Schalter 4 der Ausgangsschaltstufen 13, 14 nicht, wird kein gültiges Freigabesignal ausgegeben.

Zur Überwachung des Leitungszustands der wenigstens einen Ausgangsschaltstufe 13, 14 wird der entsprechende Schalter 4 mit einem Prüfstrom 38 beaufschlagt. Der Strom 39 des Sicherheitskreises 16 und der Prüfstrom 38 sind mittels zwei entgegengeschalteter Dioden 9a, 9b voneinander entkoppelt, so dass sich beide Stromflüsse nur über einen geschlossenen Schalter 4 ausbilden können. Dabei wird der Leitungszustand der Ausgangsschaltstufe 13, 14 beziehungsweise von deren jeweiligem Schalter 4 in Abhängigkeit des resultierenden Prüfstroms im Prüfstromkreis 38 bestimmt. In der Ausführungsform der Fig. 2 wird der Prüfstrom über den DC-DC-Wandler 2 geführt beziehungsweise von diesem gespeist und in der Folge über die Rückwirkung auf die primärseitige Stromaufnahme des DC-DC-Wandlers 2 bestimmt. Dazu wird der primärseitige Versorgungsstrom des DC-DC-Wandlers 2 über einen Shunt 6 geführt und der auftretende Spannungsabfall über einen entsprechenden Messverstärker in ein von der Steuer- und Überwachungseinheit 15 verarbeitbares Signal umgewandelt. Ein Vorteil dieser Lösung ist, dass die Information über die Größe des Prüfstroms als analoge Information an die Steuer- und Überwachungseinheit 15 übermittelt wird und von dieser zusätzliche Plausibilitätsprüfungen vorgenommen werden können, um den korrekten Leitungszustand zu verifizieren. Der DC-DC-Wandler 2 erfüllt bei dieser Ausführungsform sowohl die Funktion der potenzialgetrennten Stromversorgung der Ausgangsschaltstufe als auch die potenzialgetrennte Rückübermittlung der analogen Information über den tatsächlichen Prüfstromfluss. Bei der Bestimmung des Prüfstromflusses über den Schalter 4 aus der primärseitigen Stromaufnahme des DC-DC-Wandlers 2 werden das Übertragungsverhältnis des DC-DC-Wandlers 2, das heißt das Verhältnis von Ausgangsspannung zu Eingangsspannung, der Wirkungsgrad des Wandlers sowie die benötigte Leistung für die Ansteuerung des Schalters 4 entsprechend berücksichtigt.

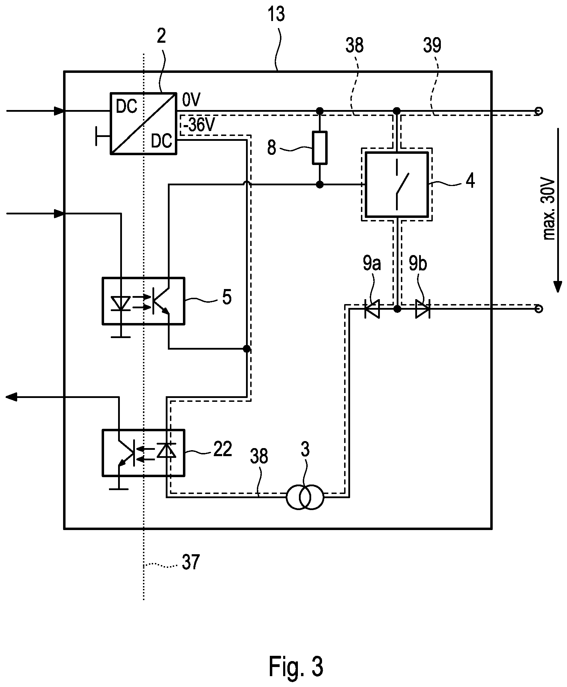

Eine Alternative hierzu zeigt die Ausführungsform der Ausgangsschaltstufe 13 der Fig. 3. Die Ausgangsschaltstufe 13 der Fig. 3 weist einen weiteren Optokoppler 22 auf. Die Sendediode des weiteren Optokopplers 22 ist direkt in Serie zur Prüfstromquelle in den Prüfstromkreis 38 eingebunden und wird vom Prüfstrom durchflossen beziehungsweise angesteuert. Über den potenzialgetrennten Ausgangstransistor des weiteren Optokopplers 22 wird die Information über den resultierenden Prüfstrom an die Steuer- und Überwachungseinheit 15 übertragen. Der Schaltzustand des elektronischen Schalters 4 wird hierbei quasi in einen korrespondierenden Schaltzustand des potenzialgetrennten Ausgangstransistors des weiteren Optokopplers 22 transformiert oder gespiegelt und somit besonders einfach durch die Steuer- und Überwachungseinheit auswertbar.

Die Ausführungsform der Ausgangsschaltstufe 13 der Fig.3 kann als jeweilige Ausgangsschaltstufe als Alternative in dem Sicherheitsschaltgerät 1 der Fig. 2 verwendet werden. Selbstverständlich können auch beide Ausführungsformen gleichzeitig, das heißt gemischt, in einem Sicherheitsschaltelement verwendet werden, so dass eine gewisse Diversität bei den Ausgangsschaltstufen 13, 14 erzielt wird.

Die Fig. 2 und Fig. 3 zeigen jeweils nur die zur Erläuterung der erfindungsgemäßen Lösung wichtigen elektronischen Komponenten der Ausgangsschaltstufen 13 beziehungsweise 14 und deren Zusammenwirken. Weitere für den praktischen Einsatz notwendige oder zweckmäßige Bauteile und Beschaltungen betreffen beispielsweise Schutzbeschaltungen gegen transiente Störspannungen, gegen Überlastung oder Übertemperatur, zur Begrenzung von Spannungs- oder Stromanstiegsgeschwindigkeiten, zur Festlegung von Bezugspotenzialen und/oder zur Einhaltung von einschlägigen Richtlinien für die elektromagnetische Verträglichkeit. Ihre geeignete Auswahl, Dimensionierung und Verschaltung liegt im Können des einschlägigen Fachmanns und ist weiters einschlägigen Applikationsschriften der Hersteller zu den Kernkomponenten wie beispielsweise dem DC-DC-Wandler oder dem elektronischen Schalter entnehmbar. Einzelne Komponenten wie insbesondere der DC-DC-Wandler können auch durch eine Mehrzahl diskreter Bauelemente gebildet sein.

Die Steuer- und Überwachungseinheit 15 des Sicherheitsschaltgerätes 1 hat ferner eine Aktivitätsüberwachungseinheit 20. Die Aktivitätsüberwachungseinheit 20 stellt sicher, dass das elektronische Schaltelement 4 nur dann angesteuert wird, wenn die Steuer- und Überwachungseinheit 15 den logischen Pegel eines Steuersignals mit zumindest einer vorbestimmten Mindestfrequenz ändert. Ferner ist die Steuer- und Überwachungseinheit 15 mit einer Überspannungseinheit 21 ausgestattet, mit welcher eine Ansteuerung des elektronischen Schaltelements 4 blockiert wird, wenn die Versorgungsspannung der Steuer- und Überwachungseinheit 15 über einen vorbestimmten Grenzwert ansteigt. Vorzugsweise wird hierzu die primärseitige Versorgung der DC-DC-Wandler 2 abgeschaltet, so dass die elektronischen Schalter 4 in den Ausgangsschaltstufen 13, 14 völlig unabhängig vom via Optokoppler 5 übertragenen Ansteuersignal abgeschaltet werden, da bei abgeschaltetem DC-DC-Wandler 2 die zum Schalten des Schalters 4 erforderliche Energie wegfällt.

Des Weiteren ist die Steuer- und Überwachungseinheit 15 mit einer Kommunikationsschnittstelle 17 ausgestattet. Die Kommunikationsschnittstelle 17 ist zum Übertragen von Betätigungszuständen, Statusinformationen, Fehlerinformationen und dergleichen eingerichtet.

Aus Gründen der Diversität können die Ausgangsschaltstufen 13, 14 auch unterschiedlich aufgebaut sein.

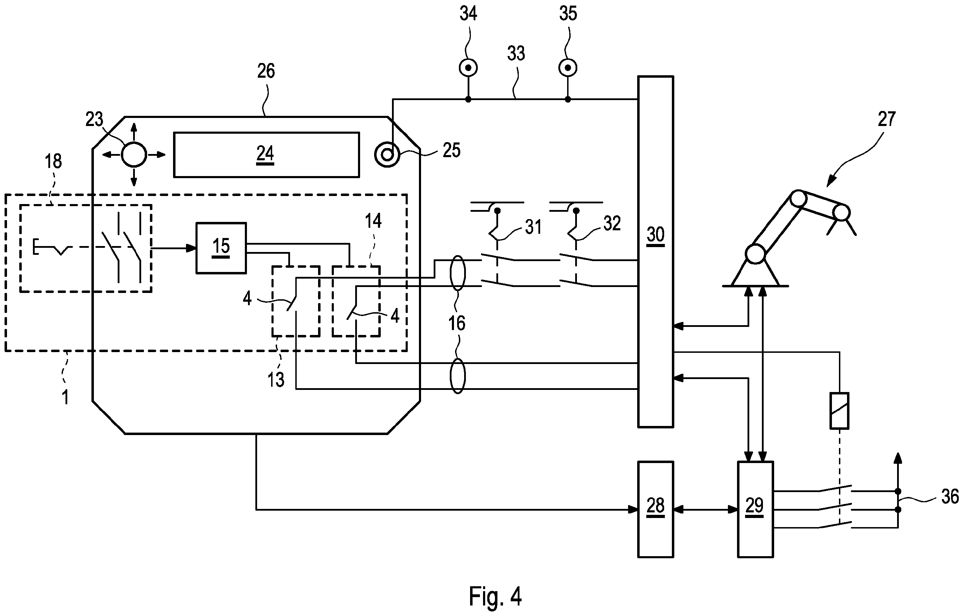

In Fig. 4 ist ein schematisches Diagramm zur Illustrierung der Anwendung eines Sicherheitsschaltgerätes 1 dargestellt.

In dem Beispiel der Fig. 4 ist das Sicherheitsschaltgerät 1 Teil eines Handbediengerätes 26, welches zum Teachen eines Roboters 27 eingerichtet ist. Bei einem solchen Teachen hält sich die Bedienperson mit dem Handbediengerät 26 im unmittelbaren Nahbereich des Roboters 27 auf, z.B. innerhalb einer üblicherweise vorhandenen (nicht dargestellten) Schutzumzäunung. Der Roboter 27 befindet sich dann in einer sicher überwachten Sonderbetriebsart mit sicher überwachter und reduzierter Geschwindigkeit und gegebenenfalls reduzierter Antriebskraft.

Im Normalbetrieb wird der Roboter 27 dagegen bei voller Arbeitsgeschwindigkeit und Antriebskraft gefahren, und die Sicherheit wird durch eine geschlossene und überwachte Schutzumzäunung oder durch eine entsprechende Sensorenüberwachung sichergestellt. Das Handbediengerät 26 hat neben dem Sicherheitsschaltgerät 1 Bedienelemente 23, Anzeigeelemente 24 und einen Notausschalter 25. Beispielsweise ist das Bedienelement 23 ein Joystick, und das Anzeigeelement 24 ist beispielsweise ein Display oder Touch-Screen.

Das Sicherheitsschaltgerät 1 der Fig. 4 basiert auf den Ausführungsformen der Fig. 2 und 3.

Zur Ansteuerung des Roboters 27 sind eine funktionale Steuerung 28 zur Umsetzung der Steuerbefehle und Programmanweisungen, ein Antrieb 29 mit Frequenzumrichter sowie eine Sicherheitssteuerung 30 vorgesehen. Der Antrieb 29 wird von einem Versorgungsnetz 36 mit elektrischer Energie versorgt. Die Sicherheitssteuerung 30 kann beispielsweise im Zusammenspiel mit den Antrieben und Sensoren des Roboters 27 auch sicher begrenzte Geschwindigkeiten oder sicher begrenzte Arbeitsräume überwachen und bei Überschreitungen die Stillsetzung veranlassen. In technisch einfacheren Anwendungen kann statt der komplexeren Sicherheitssteuerung 30 auch ein deutlich einfacheres Überwachungsgerät zum Einsatz kommen, welches im Wesentlichen nur den Zustand des Zustimm- und Notaus-Sicherheitskreises 16 bzw. 33 überwacht.

Die Ausgangsschaltstufen 13, 14 des Sicherheitsschaltgerätes 1 sind über einen mehrkreisig redundanten Sicherheitskreis 16 mit der Sicherheitssteuerung 30 gekoppelt. In dem Beispiel der Fig. 4 ist der Sicherheitskreis 16 zweikreisig ausgebildet. Der Sicherheitskreis 16 weist im dargestellten Fall ferner zwei in Serie geschaltete Endschalter 31, 32 auf, die beispielsweise in Schutztüren verbaut sind und damit zusätzliche Freigabebedingungen für einen sicheren Betrieb erfassen.

Neben dem mehrkreisigen Sicherheitskreis 16 überwacht die Sicherheitssteuerung 30 im dargestellten Fall noch einen weiteren Sicherheitskreis, der als Notaus-Sicherheitskreis 33 ausgebildet ist. In den Notaus-Sicherheitskreis sind der Notaus-Schalter 25 des Handbediengerätes sowie weitere im Umfeld des Roboters 27 angeordnete und im Notfall gut erkennbare und leicht erreichbare Notaus-Schalter 34, 35 eingebunden. Auch der Notaus-Sicherheitskreis 33 ist insbesondere mehrkreisig ausgebildet.

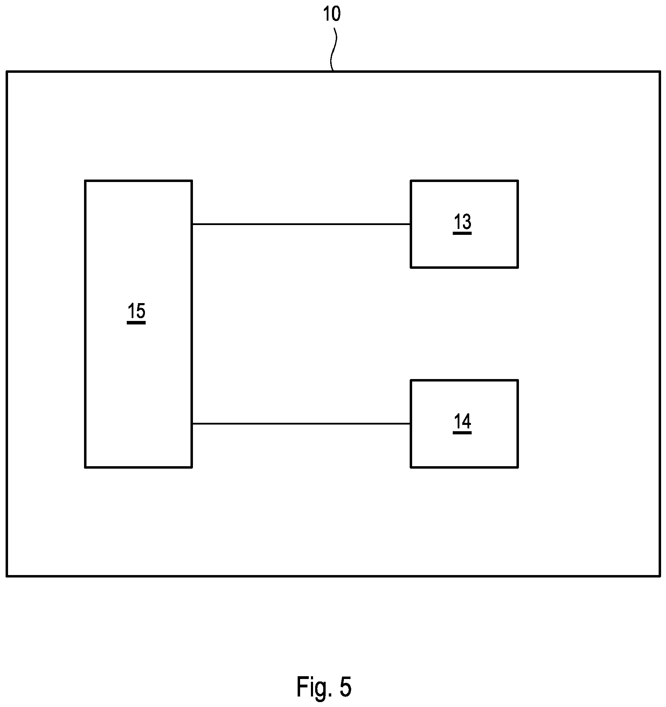

In Fig. 5 ist ein schematisches Blockdiagramm eines Ausführungsbeispiels einer Vorrichtung 10 zur Überwachung eines Sicherheitsschaltgerätes 1 zum Freischalten einer potenziell gefahrbringenden Maschinenoperation einer elektrisch gesteuerten Maschine, beispielsweise eines Roboters 27, dargestellt. Die Vorrichtung 10 hat zwei elektronische Ausgangsschaltstufen 13, 14 zur redundanten Einkopplung einer Freigabeinformation in einen mehrkreisigen, redundanten Sicherheitskreis 16 (siehe Fig. 4). Ferner hat die Vorrichtung 10 eine Steuer- und Überwachungseinheit 15, welche mit den beiden elektronischen Ausgangsschaltstufen 13, 14 gekoppelt ist. Die Steuer- und Überwachungseinheit 15 ist dazu eingerichtet, den Leitungszustand einer jeden der Ausgangsschaltstufen 13, 14 zu überwachen und die jeweils andere Ausgangsschaltstufe 13, 14 zu deaktivieren, falls der überwachte Leitungszustand einen fehlerhaften Zustand indiziert.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar.

### BEZUGSZEICHENLISTE

- 1: Sicherheitsschaltgerät
- 2: potenzialgetrennter Energieübertrager
- 3: Strom- oder Spannungsquelle, Prüfstromquelle
- 4: elektronischer Schalter, elektronische Schalteinheit
- 5: Optokoppler
- 6: Strommesswiderstand, Shunt
- 7: Strommesseinheit, Messverstärker
- 8: Widerstand
- 9a: Diode
- 9b: Diode
- 10: Vorrichtung
- 13: Ausgangsschaltstufe
- 14: Ausgangsschaltstufe
- 15: Steuer- und Überwachungseinheit
- 16: Sicherheitskreis, Zustimm-Sicherheitskreis, Überwachungsstromkreis
- 17: Schnittstelle
- 18: Zustimmtaster
- 19a: Sensor, Kontakt, erster Erfassungskreis
- 19b: Sensor, Kontakt, zweiter Erfassungskreis
- 20: Aktivitätsüberwachungseinheit
- 21: Überspannungs-Überwachungseinheit
- 22: Optokoppler
- 23: Joystick
- 24: Display
- 25: Notausschalter
- 26: Handbediengerät
- 27: Roboter
- 28: funktionale Steuerung
- 29: Antriebseinheit
- 30: Sicherheitskreis, Sicherheitssteuerung, Überwachungsgerät
- 31: Endschalter
- 32: Endschalter
- 33: Notaus-Sicherheitskreis
- 34: Notausschalter
- 35: Notausschalter
- 36: Netz
- 37: Linie zur Potentialtrennung
- 38: Prüfstromkreis
- 39: Freigabestromkreis
- S1, S2: Verfahrensschritt

## Patentansprüche

1. Verfahren zur Überwachung eines Sicherheitsschaltgeräts (1) zum Freischalten einer gefahrbringenden Maschinenoperation einer elektrisch gesteuerten Maschine (27), wobei das Sicherheitsschaltgerät (1) eine Mehrzahl von elektronischen Ausgangsschaltstufen (13, 14) zur redundanten Einkopplung einer Freigabeinformation in einen mehrkreisigen, redundanten Sicherheitskreis (16) und eine Steuer- und Überwachungseinheit (15) zum Bestimmen der Freigabeinformation aus einem oder mehreren sensorischen Eingangssignalen aufweist, mit den Schritten:
Überwachen (S1) eines Leitungszustandes von wenigstens einer elektronischen Ausgangsschaltstufe (13, 14) der Mehrzahl der Ausgangsschaltstufen (13, 14) durch die Steuer- und Überwachungseinheit (15), und
Deaktivieren (S2) wenigstens einer weiteren Ausgangsschaltstufe (13, 14) der Mehrzahl der Ausgangsschaltstufen (13, 14) durch die Steuer- und Überwachungseinheit (15), falls der überwachte Leitungszustand einen fehlerhaften Zustand indiziert,
wobei das Deaktivieren der wenigstens einen weiteren Ausgangsschaltstufe (13, 14) durch ein Öffnen eines elektronischen Schaltelements (4) der wenigstens einen weiteren Ausgangsschaltstufe (13, 14) gebildet wird, falls das elektronische Schaltelement (4) geschlossen ist,
wobei das Deaktivieren der wenigstens einen weiteren Ausgangsschaltstufe (13, 14) durch ein Unterdrücken eines Schließens des elektronischen Schaltelements (4) der wenigstens einen weiteren Ausgangsschaltstufe (13, 14) gebildet wird, falls das elektronische Schaltelement (4) geöffnet ist,
wobei das Sicherheitsschaltgerät (1) zur Überwachung des Leitungszustands der wenigstens einen Ausgangsschaltstufe (13, 14) mittels eines über das elektronische Schaltelement (4) geführten Prüfstroms einer Spannungs- oder Stromquelle (3) des Sicherheitsschaltgeräts (1) überwacht wird, wobei der Strom des Sicherheitskreises (16) und der Prüfstrom mittels zweier entgegengeschalteter Dioden (9a, 9b) entkoppelt werden, und
wobei zur Überwachung des Leitungszustands der wenigstens einen Ausgangsschaltstufe (13, 14) das entsprechende elektronische Schaltelement (4) mit dem Prüfstrom beaufschlagt wird, wobei der Leitungszustand der wenigstens einen Ausgangsschaltstufe (13, 14) in Abhängigkeit des Prüfstromflusses über das Schaltelement (4) bestimmt wird.

2. Verfahren nach Anspruch 1,
**dadurch gekennzeichnet,**
**dass** der Prüfstrom über eine eingangsseitige Stromaufnahme eines potenzialgetrennten Energieübertragers (2) für die Versorgung der Spannungs- oder Stromquelle (3) bestimmt wird.

3. Verfahren nach Anspruch 1 oder 2,
**dadurch gekennzeichnet,**
**dass** eine Sendediode eines galvanisch getrennten Optokopplers (22) zur potenzialgetrennten Übertragung des resultierenden Prüfstroms an die Steuer- und Überwachungseinheit (15) in Serie zum elektronischen Schaltelement (4) in den Prüfstromkreis (38) geschaltet wird.

4. Verfahren nach einem der Ansprüche 1 bis 3,
**dadurch gekennzeichnet,**
**dass** zur Überwachung des Leitungszustands der wenigstens einen überwachten Ausgangsschaltstufe (13, 14) eine an den Schaltanschlüssen des elektronischen Schaltelements (4) der überwachten Ausgangsschaltstufe (13, 14) gemessene Spannung mit einer vorgegebenen Grenzspannung, die kleiner als eine Spannung an der unbelasteten Spannungs- oder Stromquelle (3) für den Prüfstrom und größer als eine Spannung des geöffneten überwachten Sicherheitskreises (16) ist, verglichen wird, wobei ein fehlerhafter Zustand bestimmt wird, wenn bei deaktiviertem Schaltelement (4) die gemessene Spannung kleiner als die vorgegebene Grenzspannung ist, und ein fehlerfreier Zustand bestimmt wird, wenn die gemessene Spannung größer als die vorgegebene Grenzspannung ist.

5. Verfahren nach einem der Ansprüche 1 bis 4,
**dadurch gekennzeichnet,**
**dass** das elektronische Schaltelement (4) und die Strom- oder Spannungsquelle (3) der wenigstens einen überwachten Ausgangsschaltstufe (13, 14) gegenüber der Steuer- und Überwachungseinheit (15) und/oder gegenüber den weiteren Ausgangsschaltstufen (13, 14) potenzialgetrennt ausgeführt werden.

6. Verfahren nach einem der Ansprüche 1 bis 5,
**dadurch gekennzeichnet,**
**dass** die Energie für den Prüfstrom und die Energie für eine Ansteuerung des elektronischen Schaltelements (4) für jeweils eine Ausgangsschaltstufe (13, 14) gemeinsam über einen potenzialgetrennten Energieübertrager (2) übertragen werden.

7. Verfahren nach Anspruch 6,
**dadurch gekennzeichnet,**
**dass** die jeweilige Ausgangsschaltstufe (13, 14) mit einem potenzialfreien Signalübertragungselement (5) ausgestattet wird, mit welchem eine von dem potenzialgetrennten Energieübertrager (2) bereitgestellte Steuerspannung zum Ansteuern des elektronischen Schaltelementes (4) geschaltet wird.

8. Verfahren nach einem der Ansprüche 1 bis 7,
**dadurch gekennzeichnet,**
**dass** vorübergehende Deaktivierungen des elektronischen Schaltelementes (4) durch die Steuer- und Überwachungseinheit (15) unabhängig vom Zustand der ermittelten Freigabeinformation in periodischen Abständen durchgeführt werden, um ein zuverlässiges Öffnen des elektronischen Schaltelementes (4) zu überprüfen.

9. Verfahren nach Anspruch 8,
**dadurch gekennzeichnet,**
**dass** die Dauer der Deaktivierungen derart gewählt wird, dass sie unterhalb einer vorgegebenen Reaktionszeit eines externen Überwachungsgerätes (30) für die Überwachung und Auswertung des Sicherheitskreises (16) liegt, um zu vermeiden, dass die Abschaltungen zu Betriebsstörungen führen.

10. Verfahren nach einem der Ansprüche 1 bis 9,
**dadurch gekennzeichnet,**
**dass** die Steuer- und Überwachungseinheit (15) mit einer Aktivitätsüberwachungseinheit (20) ausgestattet wird, mit welcher das elektronische Schaltelement (4) nur dann angesteuert wird, wenn die Steuer- und Überwachungseinheit (15) den logischen Pegel eines Steuersignals mit zumindest einer vorbestimmten Mindestfrequenz ändert.

11. Verfahren nach einem der Ansprüche 1 bis 10,
**dadurch gekennzeichnet,**
**dass** die Steuer- und Überwachungseinheit (15) mit einer Überspannungsüberwachungseinheit (21) ausgestattet wird, mit welcher eine Ansteuerung des elektronischen Schaltelements (4) blockiert wird, wenn die Versorgungsspannung der Steuer- und Überwachungseinheit (15) über einen vorbestimmten Grenzwert ansteigt.

12. Verfahren nach einem der Ansprüche 1 bis 11,
**dadurch gekennzeichnet,**
**dass** die Steuer- und Überwachungseinheit (15) mit einer Kommunikationsschnittstelle (17) ausgestattet wird, welche zum Übertragen von Daten eingerichtet ist.

13. Verfahren nach einem der Ansprüche 1 bis 12,
**dadurch gekennzeichnet,**
**dass** die Ausgangsschaltstufen (13, 14) schaltungstechnisch unterschiedlich aufgebaut werden.

14. Vorrichtung (10) zur Überwachung eines Sicherheitsschaltgeräts (1) zum Freischalten einer gefahrbringenden Maschinenoperation einer elektrisch gesteuerten Maschine (27), wobei die Vorrichtung (10) eine Mehrzahl von elektronischen Ausgangsschaltstufen (13, 14) zur redundanten Einkopplung einer Freigabeinformation in einen mehrkreisigen, redundanten Sicherheitskreis (16) und eine Steuer- und Überwachungseinheit (15) aufweist, welche zum Überwachen eines Leitungszustandes wenigstens einer elektronischen Ausgangsschaltstufe (13, 14) der Mehrzahl der Ausgangsschaltstufen (13, 14) und zum Deaktivieren (S2) wenigstens einer weiteren Ausgangsschaltstufe (13, 14) der Mehrzahl der Ausgangsschaltstufen (13, 14) eingerichtet ist, falls der überwachte Leitungszustand einen fehlerhaften Zustand indiziert,
wobei die Steuer- und Überwachungseinheit (15) dazu eingerichtet ist, die wenigstens eine weitere Ausgangsschaltstufe (13, 14) durch ein Öffnen eines elektronischen Schaltelements (4) der wenigstens einen weiteren Ausgangsschaltstufe (13, 14) zu deaktivieren, falls das elektronische Schaltelement (4) geschlossen ist,
wobei die Steuer- und Überwachungseinheit (15) dazu eingerichtet ist, die wenigstens eine weitere Ausgangsschaltstufe (13, 14) durch ein Unterdrücken eines Schließens des elektronischen Schaltelements (4) der wenigstens einen weiteren Ausgangsschaltstufe (13, 14) zu deaktivieren, falls das elektronische Schaltelement (4) geöffnet ist,
wobei das Sicherheitsschaltgerät (1) zur Überwachung des Leitungszustands der wenigstens einen Ausgangsschaltstufe (13, 14) mittels eines über das elektronische Schaltelement (4) geführten Prüfstroms einer Spannungs- oder Stromquelle (3) des Sicherheitsschaltgeräts (1) überwacht wird, wobei der Strom des Sicherheitskreises (16) und der Prüfstrom mittels zweier entgegengeschalteter Dioden (9a, 9b) entkoppelt sind, und
wobei die Steuer- und Überwachungseinheit (15) dazu eingerichtet ist, zur Überwachung des Leitungszustands der wenigstens einen Ausgangsschaltstufe (13, 14) das entsprechende elektronische Schaltelement (4) mit dem Prüfstrom zu beaufschlagen, wobei der Leitungszustand der wenigstens einen Ausgangsschaltstufe (13, 14) in Abhängigkeit des Prüfstromflusses über das Schaltelement (4) bestimmt wird.

15. Sicherheitsschaltgerät (1) zum Freischalten einer gefahrbringenden Maschinenoperation einer elektrisch gesteuerten Maschine (27), mit:
einer Vorrichtung (10) nach Anspruch 14.

## Claims

1. Method for monitoring a safety switching device (1) for unlocking a dangerous machine operation of an electrically controlled machine (27), wherein the safety switching device (1) has a plurality of electronic output switching stages (13, 14) for redundantly coupling-in of a release information in a multi-circuit, redundant safety circuit (16) and has a control and monitoring unit (15) for determining the release information from one or multiple sensor input signals, comprising the steps:
monitoring (S1) a conductor condition of at least an electronic output switching stage (13, 14) of the plurality of output switching stages (13, 14) by means of the control and monitoring unit (15), and
deactivating (S2) at least one further output switching stage (13, 14) of the output switching stages (13, 14) by means of the control and monitoring unit (15) if the monitored conductor condition indicates an error state,
wherein the deactivating of the at least one further output switching stage (13, 14) is formed by an opening of an electronic switching element (4) of the at least one further output switching stage (13, 14) if the electronic switching element (4) is closed,
wherein the deactivating of the at least one further output switching stage (13, 14) is formed by a suppressing of a closing of the electronic switching element (4) of the at least one further output switching stage (13, 14) if the electronic switching element (4) is opened,
wherein the safety switching device (1) for monitoring the conductor condition of the at least one output switching stage (13, 14) is monitored by means of a test current, which is guided over the electronic switching element (4), of a voltage or current source (3) of the safety switching device (1), wherein the current of the safety circuit (16) and the test current are decoupled by means of two counter-switched diodes (91, 9b), and
wherein for monitoring the conductor condition of the at least one output switching stage (13, 14), the corresponding electronic switching element (4) is impinged with the test current, wherein the conductor condition of the at least one output switching stage (13, 14) is determined in dependence of the flow of the test current over the switching element (4).

2. Method according to claim 1,
**characterized in**
**that** the test current for the supplying of the voltage or current source is determined by means of an input-sided current receiving of an electrically isolated energy transmitter (2).

3. Method according to claim 1 or 2,
**characterized in**
**that** a sender diode of a galvanically separated optocoupler (22) is switched in series with the electronic switching element (4) into the test circuit (38) for electrically isolated transmitting of the resulting test current to the control and monitoring unit (15).

4. Method according to any one of claims 1 to 3,
**characterized in**
**that** for monitoring of the conductor condition of the at least one monitored output switching stage (13, 14), a voltage which is measured at the switching terminals of the electronic switching element (4) of the monitored output switching stage (13, 14) is compared with a predefined threshold voltage which is smaller than a voltage at the unloaded voltage or current source (3) for the test current and is greater than a voltage of the opened monitored safety circuit (16), wherein an error state is determined if the measured voltage at a deactivated switching element (4) is smaller than the predefined threshold voltage, and an error-free state is determined if the measured voltage is greater than the predefined threshold voltage.

5. Method according to any one of claims 1 to 4,
**characterized in**
**that** the electronic switching element (4) and the current or voltage source (3) of the at least one monitored output switching stage (13, 14) are carried out electrically isolated relative to the control and monitoring unit (15) and/or relative to further output switching stages (13, 14).

6. Method according to any one of claims 1 to 5,
**characterized in**
**that** the energy for the test current and the energy for a control of the electronic switching element (4) for respectively one output switching stage (13, 14) are transmitted together via a potentially separated energy transmitter (2).

7. Method according to claim 6,
**characterized in**
**that** the respective output switching stage (13, 14) is equipped with a potential-free signal transmitting element (5), with which a control voltage, which is provided by means of the potentially separated energy transmitter (2), for controlling the electronic switching element (4) is switched.

8. Method according to any one of claims 1 to 7,
**characterized in**
**that** temporal deactivations of the electronic switching element (4) are performed by means of the control and monitoring unit (15) in periodical intervals independently of the state of the determined release information in order to examine a reliably opening of the electronic switching element (4).

9. Method according to claim 8,
**characterized in**
**that** the duration of the deactivations is chosen such that the duration is below a predefined reaction time of an external monitoring device (30) for the monitoring and evaluating of the safety circuit (16) in order to prevent that the cut-offs lead to operation disorders.

10. Method according to any one of claims 1 to 9,
**characterized in**
**that** the control and monitoring unit (15) is equipped with an activation monitoring unit (20) with which the electronic switching element (4) is only controlled if the control and monitoring unit (15) changes the logic level of a control signal with at least a predetermined minimum frequency.

11. Method according to any one of claims 1 to 10,
**characterized in**
**that** the control and monitoring unit (15) is equipped with an overvoltage monitoring unit (21) with which a controlling of the electronic switch element (4) is blocked if the supply voltage of the control and monitoring unit (15) increases over a predetermined threshold value.

12. Method according to any one of claims 1 to 11,
**characterized in**
**that** the control and monitoring unit (15) is equipped with a communication interface (17) which is configured to transmit data.

13. Method according to any one of claims 1 to 12,
**characterized in**
**that** the output switching stages (13, 14) are constructed differently in terms of circuitry.

14. Device (10) for monitoring a safety switching device (1) for unlocking a dangerous machine operation of an electrically controlled machine (27), wherein the device (10) has a plurality of electronic output switching stages (13, 14) for redundantly coupling-in of a release information in a multi-circuit, redundant safety circuit (16) and has a control and monitoring unit (15) which is configured to monitor a conductor condition of the at least one electronic output switching stage (13, 14) of the output switching stages (13, 14) and to deactivate (S2) at least one further output switching stage (13, 14) of the output switching stages (13, 14) if the monitored conductor condition indicates an error state,
wherein the control and monitoring unit (15) is configured to deactivate the at least one further output switching stage (13, 14) by an opening of an electronic switching element (4) of the at least one further output switching stage (13, 14) if the electronic switching element (4) is closed,
wherein the control and monitoring unit (15) is configured to deactivate the at least one further output switching stage (13, 14) by a suppressing of a closing of the electronic switching element (4) of the at least one further output switching stage (13, 14) if the electronic switching element (4) is opened,
wherein the safety switching device (1) for monitoring of the conductor condition of the at least one output switching stage (13, 14) is monitored by means of a test current, which is guided over the electronic switching element (4), of a voltage or current source (3) of the safety switching device (1), wherein the current of the safety circuit (16) and the test current are decoupled by means of two counter-switched diodes (91, 9b),
wherein the control and monitoring unit (15) is configured to impinge the corresponding electronic switching element (4) with the test current for monitoring the conductor condition of the at least one output switching stage (13, 14), wherein the conductor condition of the at least one output switching stage (13, 14) is determined in dependence of the flow of the test current over the switching element (4).

15. Safety switching device (1) for unlocking of a dangerous machine operation of an electrically controlled machine (27), comprising: a device (10) according to claim 14.

## Revendications

1. Procédé de surveillance d'un dispositif de commutation de sécurité (1) destiné à déverrouiller un fonctionnement de machine dangereux d'une machine à commande électrique (27), dans lequel le dispositif de commutation de sécurité (1) comporte une pluralité d'étages de commutation de sortie électronique (13, 14) de couplage redondant en entrée d'informations de relâchement dans un circuit de sécurité redondant à circuits multiples (16) et comporte une unité de commande et de surveillance (15) destinée à déterminer les informations de relâchement à partir d'un ou de plusieurs signaux d'entrée de capteurs, comprenant les étapes consistant à :
surveiller (S1) une condition de conduction d'au moins un étage de commutation de sortie électronique (13, 14) de la pluralité d'étages de commutation de sortie (13, 14) au moyen de l'unité de commande et de surveillance (15), et
désactiver (S2) au moins un autre étage de commutation de sortie (13, 14) des étages de commutation de sortie (13, 14) au moyen de l'unité de commande et de surveillance (15) si la condition de conduction surveillée indique un état d'erreur, dans lequel la désactivation de l'au moins un autre étage de commutation de sortie (13, 14) est établie par une ouverture d'un élément de commutation électronique (4) de l'au moins un autre étage de commutation de sortie (13, 14) si l'élément de commutation électronique (4) est fermé,
dans lequel la désactivation de l'au moins un autre étage de commutation de sortie (13, 14) est établie par une suppression d'une fermeture de l'élément de commutation électronique (4) de l'au moins un autre étage de commutation de sortie (13, 14) si l'élément de commutation électronique (4) est ouvert,
dans lequel le dispositif de commutation de sécurité (1) destiné à surveiller la condition de conduction de l'au moins un étage de commutation de sortie (13, 14) est surveillé au moyen d'un courant de test, qui est guidé sur l'élément de commutation électronique (4), d'une source de tension ou de courant (3) du dispositif de commutation de sécurité (1), dans lequel le courant du circuit de sécurité (16) et le courant de test sont découplés au moyen de deux diodes à contre-commutation (91, 9b), et
dans lequel, pour surveiller la condition de conduction de l'au moins un étage de commutation de sortie (13, 14), l'élément de commutation électronique correspondant (4) se voit appliquer le courant de test, dans lequel la condition de conduction de l'au moins un étage de commutation de sortie (13, 14) est déterminée en fonction de la circulation du courant de test sur l'élément de commutation (4).

2. Procédé selon la revendication 1,
**caractérisé en ce que**
le courant de test destiné à l'alimentation de la source de tension ou de courant est déterminé au moyen d'une réception de courant côté entrée d'un émetteur d'énergie électriquement isolé (2).

3. Procédé selon la revendication 1 ou la revendication 2,
**caractérisé en ce que**
une diode émettrice d'un coupleur optique à séparation galvanique (22) est commuté en série avec l'élément de commutation électronique (4) dans le circuit de test (38) à des fins de transmission électriquement isolée du courant de test obtenu à l'unité de commande et de surveillance (15).

4. Procédé selon l'une quelconque des revendications 1 à 3,
**caractérisé en ce que**
pour surveiller la condition de conduction de l'au moins un étage de commutation de sortie surveillé (13, 14), une tension qui est mesurée aux bornes de commutation de l'élément de commutation électronique (4) de l'étage de commutation de sortie surveillé (13, 14) est comparée à une tension seuil prédéfinie qui est inférieure à une tension aux bornes de la source de tension ou de courant non chargée (3) en ce qui concerne le courant de test et qui est supérieure à une tension du circuit de sécurité surveillé ouvert (16), dans lequel un état d'erreur est déterminé si la tension mesurée aux bornes d'un élément de commutation désactivé (4) est inférieure à la tension seuil prédéfinie, et un état exempt d'erreur est déterminé si la tension mesurée est supérieure à la tension seuil prédéfinie.

5. Procédé selon l'une quelconque des revendications 1 à 4,
**caractérisé en ce que**
l'élément de commutation électronique (4) et la source de courant ou de tension (3) de l'au moins un étage de commutation de sortie surveillé (13, 14) sont réalisés de manière électriquement isolée par rapport à l'unité de commande et de surveillance (15) et/ou par rapport à d'autres étages de commutation de sortie (13, 14).

6. Procédé selon l'une quelconque des revendications 1 à 5,
**caractérisé en ce que**
l'énergie du courant de test et l'énergie d'une commande de l'élément de commutation électronique (4) destinées respectivement à un étage de commutation de sortie (13, 14) sont transmises conjointement par le biais d'un émetteur d'énergies potentiellement séparées (2).

7. Procédé selon la revendication 6,
**caractérisé en ce que**
l'étage de commutation de sortie respectif (13, 14) est équipé d'un élément de transmission de signal sans potentiel (5), par lequel est commutée une tension de commande destinée à commander l'élément de commutation électronique (4), qui est fournie au moyen de l'émetteur d'énergies potentiellement séparées (2).

8. Procédé selon l'une quelconque des revendications 1 à 7,
**caractérisé en ce que**
des désactivations temporelles de l'élément de commutation électronique (4) sont effectuées au moyen de l'unité de commande et de surveillance (15) sur des intervalles périodiques indépendamment de l'état des informations de relâchement déterminées afin d'examiner une ouverture fiable de l'élément de commutation électronique (4).

9. Procédé selon la revendication 8,
**caractérisé en ce que**
la durée des désactivations est choisie de sorte que la durée soit inférieure à un temps de réaction prédéfini d'un dispositif de surveillance externe (30) destiné à la surveillance et à l'évaluation du circuit de sécurité (16) afin d'empêcher que des coupures ne mènent à des problèmes de fonctionnement.

10. Procédé selon l'une quelconque des revendications 1 à 9,
**caractérisé en ce que**
l'unité de commande et de surveillance (15) est équipée d'une unité de surveillance d'activation (20) par laquelle l'élément de commutation électronique (4) n'est commandé que si l'unité de commande et de surveillance (15) change le niveau logique d'un signal de commande avec au moins une fréquence minimale prédéterminée.

11. Procédé selon l'une quelconque des revendications 1 à 10,
**caractérisé en ce que**
l'unité de commande et de surveillance (15) est équipée d'une unité de surveillance de surtension (21) par laquelle une commande de l'élément de commutation électronique (4) est bloquée si la tension d'alimentation de l'unité de commande et de surveillance (15) augmente au-delà d'une valeur seuil prédéterminée.

12. Procédé selon l'une quelconque des revendications 1 à 11,
**caractérisé en ce que**
l'unité de commande et de surveillance (15) est équipée d'une interface de communication (17) qui est configurée pour transmettre des données.

13. Procédé selon l'une quelconque des revendications 1 à 12,
**caractérisé en ce que**
les étages de commutation de sortie (13, 14) sont construits différemment en termes de circuits.

14. Dispositif (10) destiné à surveiller un dispositif de commutation de sécurité (1) destiné à déverrouiller un fonctionnement de machine dangereux d'une machine à commande électrique (27), dans lequel le dispositif (10) comporte une pluralité d'étages de commutation de sortie électronique (13, 14) de couplage redondant en entrée d'informations de relâchement dans un circuit de sécurité redondant à circuits multiples (16) et comporte une unité de commande et de surveillance (15) qui est configurée pour surveiller une condition de conduction de l'au moins un étage de commutation de sortie électronique (13, 14) des étages de commutation de sortie (13, 14) et pour désactiver (S2) au moins un autre étage de commutation de sortie (13, 14) des étages de commutation de sortie (13, 14) si la condition de conduction surveillée indique un état d'erreur,
dans lequel l'unité de commande et de surveillance (15) est configurée pour désactiver l'au moins un autre étage de commutation de sortie (13, 14) par une ouverture d'un élément de commutation électronique (4) de l'au moins un autre étage de commutation de sortie (13, 14) si l'élément de commutation électronique (4) est fermé,
dans lequel l'unité de commande et de surveillance (15) est configurée pour désactiver l'au moins un autre étage de commutation de sortie (13, 14) par une suppression d'une fermeture de l'élément de commutation électronique (4) de l'au moins un autre étage de commutation de sortie (13, 14) si l'élément de commutation électronique (4) est ouvert,
dans lequel le dispositif de commutation de sécurité (1) destiné à surveiller la condition de conduction de l'au moins un étage de commutation de sortie (13, 14) est surveillé au moyen d'un courant de test, qui est guidé sur l'élément de commutation électronique (4), d'une source de tension ou de courant (3) du dispositif de commutation de sécurité (1), dans lequel le courant du circuit de sécurité (16) et le courant de test sont découplés au moyen de deux diodes à contre-commutation (91, 9b),
dans lequel l'unité de commande et de surveillance (15) est configurée pour appliquer, à l'élément de commutation électronique correspondant (4), le courant de test de façon à surveiller la condition de conduction de l'au moins un étage de commutation de sortie (13, 14), dans lequel la condition de conduction de l'au moins un étage de commutation de sortie (13, 14) est déterminée en fonction de la circulation du courant de test sur l'élément de commutation (4).

15. Dispositif de commutation de sécurité (1) destiné à déverrouiller un fonctionnement de machine dangereux d'une machine à commande électrique (27), comprenant un dispositif (10) selon la revendication 14.
